**Europäisches Patentamt**

(19) **European Patent Office**

**Office européen des brevets**

(11) Veröffentlichungsnummer: **0 182 030**

**B1**

(12) # EUROPÄISCHE PATENTSCHRIFT

(45) Veröffentlichungstag der Patentschrift:
10.08.88

(51) Int. Cl.⁴: **G 01 M 11/08,** G 01 L 1/24

(21) Anmeldenummer: **85111792.9**

(22) Anmeldetag: **18.09.85**

(54) Lichtwellenleiter-Sensor für Zugkräfte und Verfahren zu seiner Herstellung.

(30) Priorität: 14.11.84 DE 8433322 U
27.07.85 DE 3526966

(43) Veröffentlichungstag der Anmeldung:
28.05.86 Patentblatt 86/22

(45) Bekanntmachung des Hinweises auf die Patenterteilung:
10.08.88 Patentblatt 88/32

(84) Benannte Vertragsstaaten:
AT BE CH DE FR GB IT LI NL SE

(56) Entgegenhaltungen:
EP-A-0 082 820
CA-A-1 131 953
DE-A-3 305 234
DE-A-3 322 046
GB-A-2 058 394
GB-A-2 107 458
US-A-4 488 040

PATENTS ABSTRACTS OF JAPAN, Band 7, Nr. 220
(P-226) 1365, 30. September 1983; & JP-A-58 111 905
(FURUKAWA DENKI KOGYO K.K.) 04-07-1983

(73) Patentinhaber: **Felten & Guilleaume
Energietechnik GmbH, Schanzenstrasse 24-30
Postfach 80 50 01, D-5000 Köln 80 (DE)**

(72) Erfinder: **Federmann, Helmut, Dr., Holunderweg
17,, D-5060 Bergisch Gladbach (DE)**
Erfinder: **Levacher, Friedrich Karl, Dr.,
Medardusstrasse 24, D-5024 Brauweiler (DE)**
Erfinder: **Noack, Georg, Dr.-Ing., Eschenweg 9,
D-5060 Bergisch Gladbach (DE)**

## Beschreibung

Die Erfindung betrifft einen Lichtwellenleiter-Sensor für Zugkräfte, der nach seiner Einbettung in die zu überwachenden Bauteile eine optische Überwachung der Bauteile auf eine mechanische Beanspruchung, wie Zug, Bruch oder Biegung ermöglicht. Die Erfindung betrifft weiter ein Verfahren zur Herstellung eines solchen LWL-Sensors.

Es ist bereits bekannt, einen Lichtwellenleiter (LWL) in einen zugfesten Draht aus einer faserverstärkten Harzstruktur einzubetten, um diesen Draht mittels des LWL auf Zug, Bruch oder Biegung zu überwachen (DE-OS 33 05 234). Dazu ist der LWL von einer Kunststoffschicht umschlossen, die eine inhomogene Struktur hat, LWL, Zwischenschicht und Draht sind über die ganze Länge mechanisch fest miteinander verbunden, und der LWL besitzt an seinen beiden Enden Anschlüsse für ein Licht-Durchgangsprüfgerät. Die Zwischenschicht zwischen dem LWL und der zugfesten Umhüllung besteht aus Kunststoff oder Kunstharz, dem ein definiert feingekörntes Pulver aus Glas, Quarz, Korund oder Schmirgel zugesetzt ist. Bei einer weiteren Ausführungsform kann diese Zwischenschicht auch aus harzdurchtränkten Glasfasern bestehen, die um den LWL gewickelt sind.

Solch ein zugfester Draht mit einem eingebetteten LWL soll in entspechender Stärke, mit einem Außendurchmesser von über 5 mm, als überwachbarer Spannbetondraht eingesetzt werden. Seine Ausbildung läßt sich hinsichtlich der Sensorempfindlichkeit noch verbessern.

Bei diesem zugfesten Draht besteht die Umhüllung der LWL-Seele aus einer faserverstärkten Harzstruktur, vorzugsweise aus Glasfasern in einer Matrix aus Polyesterharz. Nun ist auch bekannt, bei Faser-Verbundwerkstoffen die Verstärkungsfasern statt in eine Matrix aus Kunstharz - im Sinn von aushärtenden, duroplastischen Kunststoffen - in eine Matrix aus thermoplastischen Kunststoffen einzubetten. Bevorzugte Beispiele sind: für Glasfasern als Matrix Polyamide und für Fasern aus Kohlenstoff oder Aramiden als Matrix HD-Polyethylen (Polyethylen hoher Dichte), Polypropylen oder Polyvinylidenfluorid.

Weiter ist bekannt, die Herstellung von Profilen aus glasfaserverstärkten Kunststoffen mittels eines horizontal arbeitenden ziehverfahrens vorzunehmen. Hierbei wird eine Anzahl Glasfaserstränge (Rovings) von einem Spulengestell abgezogen, mit Harz getränkt und durch mindestens eine Ziehdüse geführt. In der Düse erfolgt die Verdichtung, außerdem werden Harzüberschuß und Luft entfernt. Anschließend wird das faserverstärkte Profil in mehreren Öfen gehärtet, in einem Bad wieder abgekühlt und nach dem Durchlaufen der Abzugsvorrichtung in einzelne Stücke getrennt.

Die Aufgabe der Erfindung besteht darin, einen LWL-Sensor für Zugkräfte auszubilden und herzustellen, der zum einen eine erhöhte Sensorempfindlichkeit hat und zum andern in verschiedenen Bauteilen eingesetzt werden kann.

Diese Aufgabe wird hinsichtlich der Ausbildung des LWL-Sensors erfindungsgemäß dadurch gelöst, daß um den primärbeschichteten LWL mindestens eine Wendel eines Metalldrahtes oder eines Glasfadens gewickelt ist, worauf eine zugfeste Umhüllung aus einer faserverstärkten Kunststoffstruktur folgt.

Für die Sensorempfindlichkeit maßgebend sind Ausbildung und Wirkung der um den primärbeschichteten LWL gewickelten Wendel. Die Begriffe "wendelförmig" und "schraubenlinienförmig" sind gleich. Dazu ist es nach der weiteren Erfindung vorteilhaft, daß der Durchmesser des Wendeldrahtes oder Wendelfadens kleiner als der des primärbeschichteten LWL ist. So liegt der Durchmesser des Wendeldrahtes oder -fadens zwischen 0,06 und 0,12 mm bei einem Durchmesser des primärbeschichteten LWL zwischen 0,15 und 0,30 mm, womit das Durchmesserverhältnis vorzugsweise bei 0,5 liegt. Von wesentlicher Bedeutung ist, daß die Schlaglänge der Wendel größer als das 2,2-fache des Durchmessers des primärbeschichteten LWL ist. Es können auch mehrere Wendeln im Parallel- oder Kreuzschlag um den primärbeschichteten LWL gewickelt sein.

Die Umhüllung der Sensorseele mit zugfesten Fasern und Kunststoffmatrix ist drahtförmig, und ihr Außendurchmesser liegt vorzugsweise zwischen 1,5 und 2,5 mm. Zur besseren Einbettung in das zu überwachende Bauteil ist es dienlich, wenn die Oberfläche der Umhüllung durch eine eingeprägte Struktur oder eine aufgewickelte Wendel uneben ist. Die drahtförmige Umhüllung kann eine weitere, nunmehr plattenförmige Umhüllung haben, in die der Sensor in Beanspruchungsrichtung der Platte eingebettet ist.

Bei einer bevorzugten Ausführungsform des LWL-Sensors ist der Wendeldraht aus Stahl- und 0,08 mm dick- und sind die zugfesten Fasern der Umhüllung aus Glas.

Verschiedene Vorteile, insbesondere der Vorteil vermehrter Anpassungsmöglichkeiten des LWL-Sensors an seine Umgebung, ergeben sich, wenn die Fasern der Umhüllung statt in eine Matrix aus Kunstharz- im Sinn von duroplastischen Kunststoffen, wie Polyesterharze- in eine Matrix aus thermoplastischen Kunststoffen, wie Polyamide oder HD-Polyethylen (Polyethylen hoher Dichte) eingebettet werden.

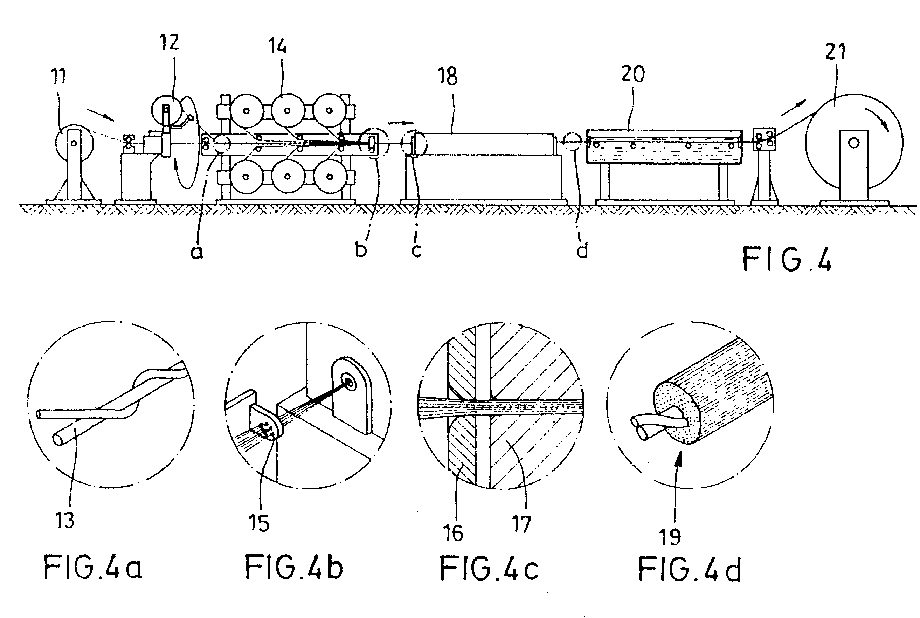

Ein Verfahren zur Herstellung eines solchen LWL-Sensors besteht erfindungsgemäß darin, daß das Aufwickeln der Wendel(n) aus einem Metalldraht oder Glasfaden auf den primärbeschichteten LWL und das Umhüllen der Sensorseele mit zugfesten Fasern, die mit dem Kunststoff beschichtet sind, in einem Arbeitsgang in einem horizontalen Ziehverfahren erfolgen. Einzelheiten dieses Verfahrens sind in den abschließenden Unteransprüchen und in der Beschreibung anhand der Fig. 4 angegeben.

Ausführungsbeispiele der Erfindung sind in der Zeichnung dargestellt und werden im folgenden näher beschrieben. Es zeigen

- Fig. 1 in Drauf- und Durchsicht einen LWL-Sensor mit einer drahtförmigen Umhüllung aus Faserverbundwerkstoff, bei dem als inhomogene Zwischenschicht ein Metalldraht um den LWL gewickelt ist,
- Fig. 2 im Längsschnitt einen LWL-Sensor mit einer weiteren, plattenförmigen Umhüllung,
- Fig. 3 in Draufsicht und Teilschnitt ein als Stecker ausgebildetes Sensorende,
- Fig. 4 in Seitenansicht und Teilschnitt eine Horizontal-Ziehanlage zur Herstellung eines LWL-Sensors, bei dem die Fasern der Umhüllung in eine Matrix aus einem thermoplastischen Kunststoff eingebettet sind, und
- Fig. 4a bis 4d vergrößerte Ansichten oder Schnitte an vier verschiedenen Stellen der Ziehanlage.

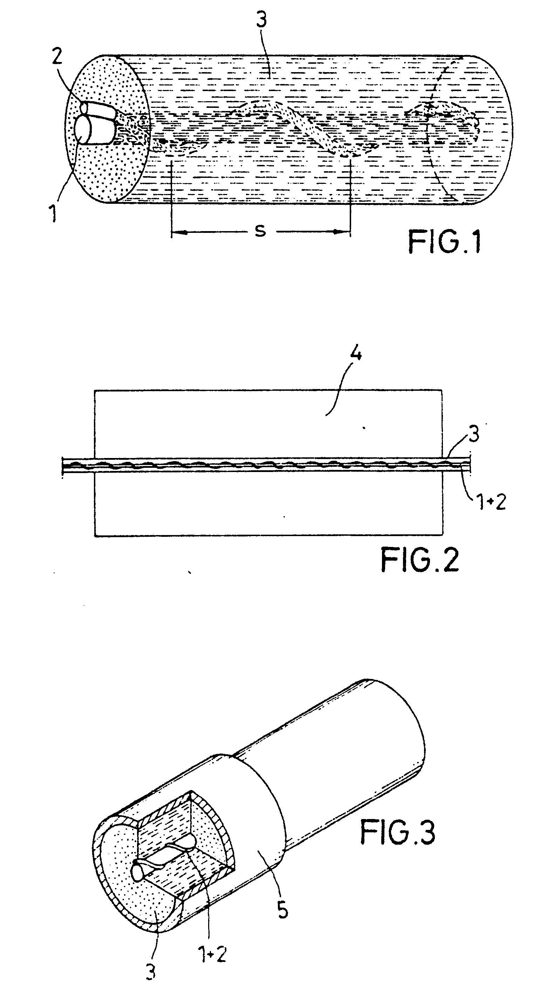

Wie die Fig. 1 zeigt, ist der primärbeschichtete LWL 1 von einer Wendel 2 umgeben, die hier aus einem Metalldraht besteht, der mit der Schlaglänge s um den LWL gewickelt ist. Um diese beiden ist die drahtförmige zugfeste Umhüllung 3 aufgebracht, die hier aus einem glasfaserverstärktem Kunststoff (GFK) besteht. Beim Aufbringen der Umhüllung 3 füllt der überschüssige Kunststoff den Zwischenraum zwischen der Wendel 2 und den in dem Kunststoff eingebetteten längslaufenden Glasfasern aus.

Wesentlich für das Erreichen einer hohen Sensorempfindlichkeit ist, daß die Schlaglänge s der Wendel 2 größer als das 2,2-fache des Durchmessers des primärbeschichteten LWL 1 ist. Diese Bedingung stellt sicher, daß bei einer Axialdehnung der zugfesten Umhüllung 3 der Durchmesser der Wendel 2 stärker abnimmt als der Durchmesser des gedehnten LWL 1 samt seiner Primärbeschichtung (Primärcoating). So drückt die Wendel axial auf den LWL und erzeugt in ihm Mikrokrümmungen, welche eine Dämpfungszunahme verursachen und mittels Dämpfungsmeßgerät feststellbar sind.

Bei dem in der Fig. 2 gezeigten LWL-Sensor mit einer weiteren, plattenförmigen Umhüllung aus GFK ist der drahtförmige Sensor 1-3 in Beanspruchungsrichtung (hier die Längsrichtung) der Platte 4 in diese eingebettet. Es kann aber auch die LWL-Seele (primärbeschichteter LWL 1 samt darumgewickelter Wendel 2) unmittelbar in die Platte 4 aus GFK eingebettet sein.

Für die Anschlüsse des LWL-Sensors kommt ein Stecker zur Anwendung, wie er bei Monomode-LWL bereits erprobt und in der Fig. 3 gezeigt ist. Dazu ist an jedem Ende des Sensors eine Metallhülse 5 auf die Umhüllung (Schutzhülle) 3 aufgeklebt, deren Außendurchmesser - nach einer Zentrierung des umfaßten LWL 1 in die Drehachse einer Drehbank - von einem Übermaß auf das für LWL-Steckverbindungen geltende DIN-Maß abgedreht ist. Zur Anwendung gelangt DIN 47255 Teil 1 (Entwurf April 84).

In der Fig. 4 ist eine Ziehanlage zur Herstellung eines LWL-Sensors mit einer Umhüllung aus einer faserverstärkten Thermoplaststruktur gezeigt, bei der auf einem gemeinsamen Fundament folgende wesentliche Anlagenteile in Reihe angeordnet sind: am Anfang die Vorratstrommel (Ablauftrommel) 11 mit dem primärbeschichteten LWL 1 und der Wickler 12 mit dem Metalldraht oder Glasfaden für die Wendel 2; dann die Ablaufvorrichtung 14 für die mit dem thermoplastischen Kunststoff imprägnierten Glasfaserstränge (Rovings), die Faserstrangführung 15 und die Formgebungsdüse (Ziehdüse) 16; anschließend Heizelement 17 und Heizvorrichtung 18; und schließlich die Kühlvorrichtung (Trog mit Wasser) 20 und der Aufwickler (Trommel mit Antrieb) 21.

Aus der Fig. 4 kann man die einzelnen Schritte des Herstellungsverfahrens so ersehen, daß

a) der primärbeschichtete LWL 1 von der Vorratstrommel 11 abgezogen, in die horizontale Achse der Ziehanlage 11-21 geführt und mit dem Metalldraht oder Glasfaden 2 wendelförmig umwickelt wird,

b) die Sensorseele 13 (LWL 1 samt darumgewickelter Wendel 2) zentrisch und mit reproduzierbar eingestellter Zugspannung durch die Faserstrang-Ablaufvorrichtung 14 zu der Faserstrangführung 15 gezogen wird, und dabei die mit dem thermoplastischen Kunststoff imprägnierten Faserstränge (Rovings) an die Sensorseele herangeführt werden,

c) die umhüllte Sensorseele weiter durch die Formgebungsdüse 16 mit dem Heizelement 17 und durch die Heizvorrichtung 18 gezogen wird, wo die Imprägnierung aufgeschmolzen wird, die Strangelemente miteinander verbunden werden, und der Strang kalibriert wird, und

d) der Strang 19 in einem Trog 20 mit Wasser abgekühlt und auf die Trommel 21 aufgewickelt wird.

Soll die Oberfläche des Stranges uneben ausgebildet werden, wird unmittelbar nach dem Kalibrieren entweder in sie eine Struktur eingeprägt oder auf sie mindestens ein Draht oder Faden wendelförmig aufgewickelt.

**Patentansprüche**

1. Lichtwellenleiter-Sensor für Zugkräfte, bei dem um einen primärbeschichteten Lichtwellenleiter (1) mindestens eine Wendel (2) eines Metalldrahtes oder eines Glasfadens gewickelt ist, worauf eine zugfeste Umhüllung (3) aus einer faserverstärkten Kunststoffstruktur folgt.

2. LWL-Sensor nach Anspruch 1, dadurch gekennzeichnet, daß der Durchmesser des Wendeldrahtes oder Wendelfadens (2) kleiner als der des primärbeschichteten LWL (1) ist.

3. LWL-Sensor nach Anspruch 2, dadurch gekennzeichnet, daß der Durchmesser des Wendeldrahtes oder Wendelfadens (2) zwischen 0,06 und 0,12 mm, und der Durchmesser des primärbeschichteten LWL (1) zwischen 0,15 und 0,30 mm liegt, womit das Durchmesserverhältnis vorzugsweise bei 0,5 liegt.

4. LWL-Sensor nach einem der Ansprüche 1 bis 3, dadurch gekennzeichnet, daß die Schlaglänge der Wendel (2) größer als das 2,2-fache des Durchmessers des primärbeschichteten LWL (1) ist.

5. LWL-Sensor nach Anspruch 4, dadurch gekennzeichnet, daß mehrere Wendeln (2) im Parallel- oder Kreuzschlag um den primärbeschichteten LWL (1) gewickelt sind.

6. LWL-Sensor nach einem der Ansprüche 1 bis 5, dadurch gekennzeichnet, daß die Umhüllung (3) aus zugfesten Fasern und Kunstharzmatrix drahtförmig ist und ihr Außendurchmesser zwischen 1,5 und 2,5 mm liegt.

7. LWL-Sensor nach einem der Ansprüche 1 bis 6, dadurch gekennzeichnet, daß die Oberfläche der Umhüllung (3) zur besseren Einbettung in das zu überwachende Bauteil durch eine eingeprägte Struktur oder eine aufgewickelte Wendel uneben ist.

8. LWL-Sensor nach Anspruch 6 oder 7, dadurch gekennzeichnet, daß er eine weitere, plattenförmige Umhüllung (4) hat, und daß der drahtförmige Sensor (1-3) in Beanspruchungsrichtung der Platte (4) in diese eingebettet ist.

9. LWL-Sensor nach einem der Ansprüche 1 bis 8, dadurch gekennzeichnet, daß an jedem Ende des drahtförmigen Sensors eine Metallhülse (5) auf die Sensorumhüllung (3) aufgeklebt ist, deren Außendurchmesser auf das für LWL-Steckverbinder geltende DIN-Maß abgedreht ist.

10. LWL-Sensor nach einem der Ansprüche 1 bis 9, dadurch gekennzeichnet, daß der Wendeldraht (2) aus Stahl ist und die zugfesten Fasern der Umhüllung (3) aus Glas sind.

11. LWL-Sensor nach einem der Ansprüche 1 bis 10, dadurch gekennzeichnet, daß die Fasern der Umhüllung (3) statt in einer Matrix aus Kunstharz - im Sinne von duroplastischen Kunststoffen, wie Polyesterharze - in einer Matrix aus thermoplastischen Kunststoffen, wie Polyamide oder HD-Polyethylen eingebettet sind.

12. Verfahren zur Herstellung eines LWL-Sensors nach Anspruch 11, dadurch gekennzeichnet, daß das Aufwickeln der Wendel(n) (2) aus einem Metalldraht oder Glasfaden auf den primärbeschichteten LWL (1) und das Umhüllen der Sensorseele (1 + 2) mit zugfesten Fasern, die mit einem thermoplastischen Kunststoff beschichtet sind, in einem Arbeitsgang in einem horizontalen Ziehverfahren erfolgen.

13. Verfahren zur Sensorherstellung nach Anspruch 12, bei dem die Faserstränge von einer Vorrichtung abgezogen, durch eine Führung und mindestens eine Formgebungsdüse gezogen, aufgeheizt, wieder abgekühlt und schließlich aufgewickelt werden, dadurch gekennzeichnet, daß

a) der primärbeschichtete LWL (1) von einer Vorratstrommel (11) abgezogen, in die horizontale Achse der Ziehanlage (11-21) geführt und mit dem Metalldraht oder Glasfaden (2) wendelförmig umwickelt wird,

b) die Sensorseele (1 + 2) zentrisch und mit reproduzierbar eingestellter Zugspannung durch eine Faserstrang-Ablaufvorrichtung (14) zu einer Faserstrangführung (15) gezogen wird, und dabei die mit dem thermoplastischen Kunststoff imprägnierten Faserstränge (Rovings) an die Sensorseele herangeführt werden,

c) die umhüllte Sensorseele weiter durch eine Formgebungsdüse (16) mit einem Heizelement (17) und durch eine Heizvorrichtung (18) gezogen wird, wo die Imprägnierung aufgeschmolzen wird, die Strangelemente vollständig miteinander verbunden werden, und der Strang kalibriert wird, und

d) der Strang (19) in einem Trog (20) mit Wasser abgekühlt und auf eine Trommel (21) aufgewickelt wird.

14. Verfahren zur Sensorherstellung nach Anspruch 13, dadurch gekennzeichnet, daß unmittelbar nach dem Kalibrieren des Stranges in dessen Oberfläche eine Struktur eingeprägt oder auf sie mindestens ein Draht oder Faden wendelförmig aufgewickelt wird.

## Claims

1. Light wave guide sensor for tensile forces, in which at least one coil (2) of a metal wire or a glass thread is wound around a primary-coated light wave guide (1), followed by a high tensile covering (3) of a fibre-reinforced synthetic structure.

2. Light wave guide sensor according to Claim 1, characterised in that the diameter of the coiled wire or coiled thread (2) is smaller than that of the primary-coated light wave guide (1).

3. Light wave guide sensor according to Claim 2, characterised in that the diameter of the coiled wire or coiled thread (2) is between 0.06 and 0.12 mm and the diameter of the primary-coated light wave guide (1) is between 0.15 and 0.30 mm, the ratio of diameters preferably being 0.5.

4. Light wave guide sensor according to one of Claims 1 to 3, characterised in that the length of lay of the coil (2) is greater than 2.2 times the diameter of the primary-coated light wave guide (1).

5. Light wave guide sensor according to Claim 4, characterised in that a plurality of coils (2) are wound with a parallel or cross lay around the primary-coated light wave guide (1).

6. Light wave guide sensor according to one of Claims 1 to 5, characterised in that the covering (3) of high-tensile fibres and synthetic resin matrix is in the form of a wire and its outer diameter is between 1.5 and 2.5 mm.

7. Light wave guide sensor according to one of Claims 1 to 6, characterised in that for better embedding in the component to be monitored, the surface of the covering (3) is uneven due to an embossed structure or a coil wound thereon.

8. Light wave guide sensor according to Claim 6 or 7, characterised in that it has a further, platelike covering (4) and that the wire-like sensor (1-3) is embedded in the latter in the direction of stress of the plate (4).

9. Light wave guide sensor according to one of Claims 1 to 8, characterised in that at each end of the wire-like sensor, a metal sleeve (5) is stuck to the sensor covering (3), the outer diameter of which sleeve is turned to the DIN-standard valid for light wave guide plug connectors.

10. Light wave guide sensor according to one of Claims 1 to 9, characterised in that the coiled wire (2) consists of steel and the high-tensile fibres of the covering (3) consist of glass.

11. Light wave guide sensor according to one of Claims 1 to 10, characterised in that instead of being in a matrix of synthetic resin - in the sense of thermosetting plastics, such as polyester resins - the fibres of the covering (3) are embedded in a matrix of thermoplastic synthetic. materials, such as polyamides or high density polyethylene.

12. Method for the production of a light wave guide sensor according to Claim 11, characterised in that the winding of the coil (s) (2) of a metal wire or glass thread on the primary-coated light wave guide (1) and the wrapping of the sensor core (1+2) with high-tensile fibres, which are coated with a thermoplastic synthetic material, take place in one operation in a horizontal drawing process.

13. Method for the production of a sensor according to Claim 12, in which the fibre strands are withdrawn from an apparatus, drawn through a guide and at least one shaping nozzle, heated, cooled again and finally coiled, characterised in that
a) the primary-coated light wave guide (1) is withdrawn from a storage drum (11), guided along the horizontal axis of the drawing installation (11-21) and wrapped with the metal wire or glass thread (2) in a helical manner,
b) the sensor core (1+2) is drawn centrally and with reproducibly pre-set tension through a fibre strand wind-off device (14) to a fibre strand guide (15) and in this case the fibre strands (rovings) impregnated with the thermoplastic synthetic material are guided to the sensor core,
c) the wrapped sensor core is again drawn through a shaping nozzle (16) with a heating element (17) and through a heating device (18), where the impregnation is melted, the strand elements are completely connected to each other and the strand is calibrated and
d) the strand (19) is cooled in a trough (20) with water and wound onto a drum (21).

14. Method for the production of a sensor according to Claim 13, characterised in that directly after the calibration of the strand, a structure is embossed in its surface or at least one wire or thread is wound thereon in a helical manner.

**Revendications**

1. Dispositif sensitif de conducteur en fibre optique pour forces de traction, caractérisé en ce que, autour d'un conducteur en fibre optique (1) recouvert d'une couche primaire, au moins une spirale (2), un fil métallique ou un filament de verre est enroulé, sur lequel un revêtement (3) résistant à la traction résulte d'une structure en matière plastique renforcée par des fibres.

2. Dispositif sensitif de conducteur en fibre optique selon la revendication 1, caractérisé en ce que le diamètre du fil de la spirale ou du filament de la spirale (2) est plus petit que celui du conducteur en fibre optique recouvert d'une couche primaire (1).

3. Dispositif sensitif de conducteur en fibre optique selon la revendication 2, caractérisé en ce que le diamètre du fil de la spirale ou du filament de la spirale (2) se situe entre 0,06 et 0,12 mm et que le diamètre du conducteur en fibre optique recouvert d'une couche primaire (1) se situe entre 0,15 et 0,30 mm, pour lesquels le rapport des diamètres se situe, de préférence, à 0,5.

4. Dispositif sensitif de conducteur en fibre optique selon une des revendications 1 à 3, caractérisé en ce que le pas de la spirale (2) est 2,2 fois plus grand que le diamètre du conducteur en fibre optique (1) recouvert d'une couche primaire.

5. Dispositif sensitif de conducteur en fibre optique selon la revendication 4, caractérisé en ce que plusieurs spirales (2) sont enroulées en parallèle ou en croix autour du conducteur en fibre optique (1) recouvert d'une couche primaire.

6. Dispositif sensitif de conducteur en fibre optique selon l'une des revendications 1 à 5, caractérisé en ce que le revêtement (3) est en forme de fil à base de fibres solides à la traction d'une matrice de résine synthétique et que son diamètre extérieur se situe entre 1,5 et 2,5 mm.

7. Dispositif sensitif de conducteur en fibre optique selon l'une des revendications 1 à 6, caractérisé en ce que la surface du revêtement (3) pour un meilleur enrobage est inégale dans l'élément de construction à contrôler au moyen d'une structure gravée ou d'une spirale enroulée.

8. Dispositif sensitif de conducteur en fibre optique selon une des revendications 1 à 7, caractérisé en ce qu'il a un recouvrement supplémentaire (4) en forme de plaque et que le dispositif sensitif en forme de fil (1-3) dans la direction d'utilisation de la plaque (4) est enrobé dans celle-ci.

9. Dispositif sensitif de conducteur en fibre optique selon l'une des revendications 1 à 8, caractérisé en ce que, à chaque extrémité du dispositif sensitif en forme de fil, une cosse métallique (5) est collée sur le revêtement du dispositif sensitif (3), dont le diamètre extérieur est conforme à la norme DIN valable pour les connecteurs de fiche de conducteur en fibre optique.

10. Dispositif sensitif de conducteur en fibre optique selon une des revendications 1 à 9, caractérisé en ce que le fil de la spirale (2) est en acier et que les fibres solides à la traction du revêtement (3) sont en verre.

11. Dispositif sensitif de conducteur en fibre optique selon une des revendications 1 à 10, caractérisé en ce que les fibres du revêtement sont enrobées dans, au lieu d'une matrice en résine synthétique, dans le sens d'une matière plastique duroplastique, comme les résines en polyester, mais dans une matrice en matière plastique thermoplastique comme les polyamides ou le polythène haute densité.

12. Procédé pour la fabrication d'un dispositif sensitif d'un conducteur en fibre optique selon la revendication 11, caractérisé en ce que le déroulement de (s) spirale (s) (2) à base d'un fil métallique ou d'un filament de verre, sur le conducteur en fibre optique (1) recouvert d'une couche primaire et le recouvrement de l'âme du dispositif (1 + 2) avec des fibres solides à la traction qui sont recouvertes de matière plastique thermoplastique est effectué en une seule étape dans un processus d'étirage horizontal.

13. Procédé pour la fabrication du dispositif sensitif selon la revendication 12 pour lequel les cordes de fibres retirées d'un dispositif, tirées à travers une conduite et au moins une buse de façonnage sont chauffées, puis refroidies et finalement déroulées, caractérisé en ce que:

a) le conducteur en fibre optique (1) recouvert d'une couche primaire est retiré d'un tambour d'approvisionnement (11), conduit dans l'axe horizontal de l'installation d'étirage (11, 21) et est enroulé avec le fil métallique ou le filament de verre (2) en forme de spirale,

b) l'âme du dispositif sensitif (1 + 2) est tirée vers le centre et avec un effort de traction mis en place d'une manière reproductible et tiré à travers un dispositif de décharge en corde de fibres (14) vers une conduite en corde de fibres (15) et, de cette façon, les cordes de fibres (Rovings) imprégnés de matière plastique thermoplastique sont rapprochées de l'âme du dispositif sensitif;

c) l'âme du dispositif sensitif recouverte est tirée à nouveau à travers une buse de façonnage (16) avec un élément de chauffage (17) et à travers un dispositif de chauffage (18) où l'imprégnation est complètement fondue, les éléments de cordes sont complètement assemblés les uns aux autres et où la corde est calibrée et;

d) le cordon (19) est refroidi dans une auge (20) avec de l'eau et enroulé sur un tambour (21).

14. Procédé pour la fabrication du dispositif sensitif selon la revendication 13, caractérisé en ce que, immédiatement après le calibrage de la corde, on grave sur la surface de celui-ci une structure ou on enroule au moins un fil ou un filament en forme de spirale sur celle-ci.

FIG.1

FIG.2

FIG.3

FIG.4

FIG.4a

FIG.4b

FIG.4c

FIG.4d

0 182 030